(19) Europäisches Patentamt
European Patent Office
Office européen des brevets

(11) **EP 2 151 881 B1**

(12) **EUROPEAN PATENT SPECIFICATION**

(45) Date of publication and mention
of the grant of the patent:
**08.08.2012 Bulletin 2012/32**

(51) Int Cl.:
*H01M 4/133* (2010.01)      *H01M 4/583* (2010.01)
*H01M 4/587* (2010.01)

(21) Application number: **07744635.9**

(86) International application number:
**PCT/JP2007/061250**

(22) Date of filing: **29.05.2007**

(87) International publication number:
**WO 2008/146411 (04.12.2008 Gazette 2008/49)**

(54) **NEGATIVE ELECTRODE MATERIAL FOR LITHIUM RECHARGEABLE BATTERY**

NEGATIVE-ELEKTRODENMATERIAL FÜR EINE WIEDERAUFLADBARE LITHIUMBATTERIE

MATÉRIAU D'ÉLECTRODE NÉGATIVE POUR BATTERIE AU LITHIUM RECHARGEABLE

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**10.02.2010 Bulletin 2010/06**

(73) Proprietor: **Tokai Carbon Co., Ltd.
Minato-ku
Tokyo 107-8636 (JP)**

(72) Inventors:
• **YOSHIKAWA, Kazuo
Tokyo 107-8636 (JP)**
• **MIURA, Koji
Tokyo 107-8636 (JP)**
• **TSUCHIYA, Masakatsu
Tokyo 107-8636 (JP)**
• **ISHII, Kenta
Tokyo 107-8636 (JP)**

(74) Representative: **Flaccus, Rolf-Dieter
Flaccus · Müller-Wolff
Patentanwälte
Bussardweg 10
50389 Wesseling (DE)**

(56) References cited:
**JP-A- 2004 211 012      JP-A- 2005 243 410
JP-A- 2006 257 110**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a negative electrode material used as a lithium carrier for a lithium secondary battery.

BACKGROUND ART

A lithium secondary battery (i.e., non-aqueous electrolyte secondary battery) that utilizes an organic lithium salt as an electrolyte has a reduced weight and a high energy density, and has been expected to be a power supply for small portable electronic instruments, hybrid cars, electric vehicles, and the like. Lithium metal has been used as a negative electrode material for lithium secondary batteries. However, since lithium ions precipitate and grow in the form of a dendrite during charging and also pose safety problems, use of a carbon material (e.g., graphite) that does not pose such problems has been proposed.

A graphite material exhibits a high charging/discharging efficiency due to an excellent lithium ion doping-undoping capability, and enables production of a high-voltage battery since a potential almost equal to that of lithium metal is obtained during charging/discharging. However, a graphite material that is highly graphitized and has a highly developed hexagonal carbon layer structure easily reacts with an electrolyte so that the charging/discharging efficiency decreases (i.e., the battery output decreases). Moreover, the charging/discharging cycle characteristics of the battery deteriorate.

Specifically, when using a graphite material that is highly graphitized, the graphite layers may be separated or decomposed due to cointercalation of a propylene carbonate electrolyte or the like into graphite.

In order to solve the above problem, JP-A-07-069611 discloses using a carbon material in which minute crystallites are arranged in a disorderly manner to prevent destruction of the hexagonal carbon layer structure and maintain excellent cycle characteristics. However, the cycle characteristics tend to deteriorate when the charging/discharging cycle has been performed about forty times.

It is effective to reduce the lithium ion diffusion path (i.e., reduce the particle diameter of a carbon material that forms a negative electrode material) in order to increase the lithium ion doping-undoping speed. For example, JP-A-07-272725 discloses grinding mesophase carbon spherules to an average particle size of 3 to 10 $\mu$m, heating the mesophase carbon spherules to 600 to 700°C at a temperature rise rate of 10°C/hr or less, and firing the resulting product at 1000 to 3000°C to obtain a negative electrode material. However, since the mesophase carbon spherules have a large particle diameter (i.e., 3 to 10 $\mu$m), the lithium ion diffusion path is reduced to only a small extent. Therefore, this method is insufficient to increase the doping-undoping speed to obtain a high output.

When using a lithium secondary battery as a power supply for a hybrid car, an electric vehicle, or the like, the lithium secondary battery is required to achieve a high output within a short period of time during hill start, for example. Specifically, a high lithium ion doping-undoping speed is required. Moreover, excellent cycle characteristics are also required.

In this case, it is necessary to increase the lithium ion doping-undoping speed by forming a negative electrode material using a carbon material having a small particle diameter while improving the charging/discharging cycle characteristics using a non-graphitizing carbon material that is not highly graphitized and has a hexagonal carbon layer structure that is not highly developed.

Carbon black is a carbon material that has a small particle diameter and is not highly graphitized. For example, furnace black has a primary particle diameter (elementary particle diameter) of about 10 to 100 nm. JP-A-63-285872 discloses a non-aqueous solvent secondary battery that utilizes carbon black as a lithium carrier, the carbon black having a lattice spacing (d002) measured by X-ray diffractometry of 3.35 to 3.8 angstroms, a crystallite size Lc of 10 to 250 angstroms, a crystallite size La of 15 to 250 angstroms, and a specific surface area of 50 m$^2$/g or more. The applicant of the present application also proposed a negative electrode material for lithium secondary batteries that is formed using carbon black (JP-A-06-068867, JP-A-06-068868, and JP-A-06-068869).

However, since carbon black forms a complex aggregate (structure) in which a large number of primary particles are branched in the shape of chains and are bonded three-dimensionally, lithium ions move through the aggregate. Therefore, the diffusion path may not be necessarily reduced even when using carbon black having a small primary particle diameter.

Thermal black obtained by pyrolyzing a hydrocarbon raw material has a large particle diameter and has a structure that is not highly developed (i.e., the aggregate structure of the carbon black particles is small). A lithium secondary battery of which the output characteristics and the cycle characteristic are improved by utilizing thermal black as the negative electrode has been disclosed (JP-T-11-514491). However, an improvement in cycle characteristics is not necessarily sufficient. Specifically, since thermal black has a large particle diameter and a broad particle diameter distribution (i.e., has a non-uniform particle diameter), local current concentration easily occurs so that the cycle characteristics are adversely affected.

The applicant of the present application confirmed that excellent battery performance can be obtained by utilizing carbon microspheres having a substantially single particle configuration as a negative electrode material for lithium secondary batteries (JP-A-2005-243410).

DISCLOSURE OF THE INVENTION

In JP-A-2005-243410, since the carbon microspheres are produced by gradually pyrolyzing a raw material at a relatively low temperature in a hydrogen atmosphere using hydrogen gas as a carrier gas, tarry carbon substances remain on the surface of the carbon microspheres. It is necessary to perform a post-heat treatment at a temperature of 2000°C or more in order to remove the tarry carbon substance. As a result, graphite is crystallized and easily reacts with an electrolyte so that the charging/discharging efficiency decreases (i.e., the battery output decreases).

The present invention was conceived based on JP-A-2005-243410 in order to improve the technology disclosed in JP-A-2005-243410. An object of the present invention is to provide a negative electrode material for high-output lithium secondary batteries that have a high lithium ion doping-undoping speed and excellent charging/discharging cycle characteristics, and may be used as a power supply for portable instruments, hybrid cars, electric vehicles, and the like.

A negative electrode material for lithium secondary batteries according to the present invention that achieves the above object comprises carbon microspheres having an arithmetic mean particle diameter dn measured using an electron microscope of 150 to 1000 nm, a volatile content Vm of 5.0% or less, a ratio $\Delta Dst/Dst$ (where, Dst indicates the Stokes mode diameter Dst measured using a disk centrifuge (DCF), and $\Delta Dst$ indicates the half-width of the Stokes mode diameter Dst) of 0.40 to 1.10, and a lattice spacing (d002) measured by X-ray diffractometry of 0.360 to 0.370 nm said carbon microspheres being produced by pyrolyzing a hydrocarbon gas in an external heating furnace together with a carrier gas excluding hydrogen gas.

According to the present invention, since the negative electrode material for lithium secondary batteries is formed of the carbon microspheres that aggregate to only a small extent while specifying the particle properties and the crystal properties of the carbon microspheres, a lithium secondary battery that has a high lithium ion doping-undoping speed and excellent charging/discharging cycle characteristics can be provided.

BRIEF DESCRIPTION OF THE DRAWINGS

FIG. 1 shows a distribution curve that indicates the relationship between the elapsed time from the addition of a carbon microsphere dispersion during the Stokes mode diameter Dst measurement and the absorbance of the carbon microspheres due to centrifugal sedimentation.

FIG 2 shows a distribution curve that indicates the relationship between the Stokes mode diameter obtained by the Stokes mode diameter Dst measurement and the absorbance.

FIG 3 is a view illustrative of the entire configuration of an apparatus used to produce the carbon microspheres according to the present invention.

BEST MODE FOR CARRYING OUT THE INVENTION

The carbon microspheres that form the negative electrode material for lithium secondary batteries according to the present invention have an arithmetic mean primary particle diameter dn measured using an electron microscope of 150 to 1000 nm, a volatile content Vm of 5.0% or less, and a ratio $\Delta Dst/Dst$ (where, Dst indicates the Stokes mode diameter Dst measured using a disk centrifuge (DCF), and $\Delta Dst$ indicates the half-width of the Stokes mode diameter Dst) of 0.40 to 1.10.

If the arithmetic mean primary particle diameter dn (hereinafter may be referred to as "mean particle diameter dn") of the carbon microspheres measured using an electron microscope is less than 150 nm, the carbon microspheres ensure a high lithium ion doping-undoping speed, but may react with an electrolyte due to a large specific surface area. As a result, the initial efficiency of the battery decreases. The term "initial efficiency" is calculated by "$B/A \times 100$ (%)" (where, A indicates the initial charge capacity when lithium ions are initially doped between the hexagonal carbon layers, and B indicates the initial discharge capacity B when the lithium ions are undoped).

The hexagonal carbon layers are destroyed as the charging/discharging cycle is repeated so that the cycle characteristics (i.e., the battery capacity maintenance rate with respect to repeated charging/discharging) deteriorate.

If the arithmetic mean primary particle diameter dn exceeds 1000 nm, since the lithium ion diffusion path is not reduced, the high lithium ion doping-undoping speed decreases. As a result, a high output may not be obtained.

The arithmetic mean primary particle diameter dn is measured as follows. Specifically, a sample is dispersed in chloroform for 30 seconds at a frequency of 28 kHz using an ultrasonic disperser to prepare a dispersion. The dispersion is secured on a carbon substrate. The sample is photographed using an electron microscope at a direct magnification of 10,000 and a total magnification of 100,000. The diameters of a thousand particles in the photograph are measured at random. The arithmetic mean primary particle diameter is calculated from a histogram at intervals of 14 nm.

Since the surface active sites of the carbon microspheres are filled with tar and surface functional groups present on the surface of the carbon microspheres, the amount of tar and surface functional groups present on the surface of the carbon microspheres must be small. In particular, it is necessary to remove tarry substances (i.e., undecomposed raw-material hydrocarbon) as much as possible. Therefore, the volatile content Vm is limited to 5.0% or less. The volatile content Vm is measured in accordance with JIS K 6221-1986 "Testing methods for carbon black for rubber".

The carbon microspheres according to the present invention have a ratio $\Delta Dst/Dst$ (where, Dst indicates the Stokes mode diameter Dst measured using a disk centrifuge (DCF), and $\Delta Dst$ indicates the half-width of the Stokes mode diameter Dst) of 0.40 to 1.10. If the size distribution of the aggregated primary particles is too broad, local current constriction occurs when a current flows through the negative electrode.

If the size distribution of the primary particle aggregates is too narrow, applicability when forming an electrode decreases. In the present invention, the ratio $\Delta Dst/Dst$ is limited to 0.40 to 1.10 so that the size distribution of the primary particle aggregates is within a given range. The Stokes mode diameter Dst is preferably about 150 to 1500 nm.

The Stokes mode diameter Dst and the half-width $\Delta Dst$ are measured by the following method.

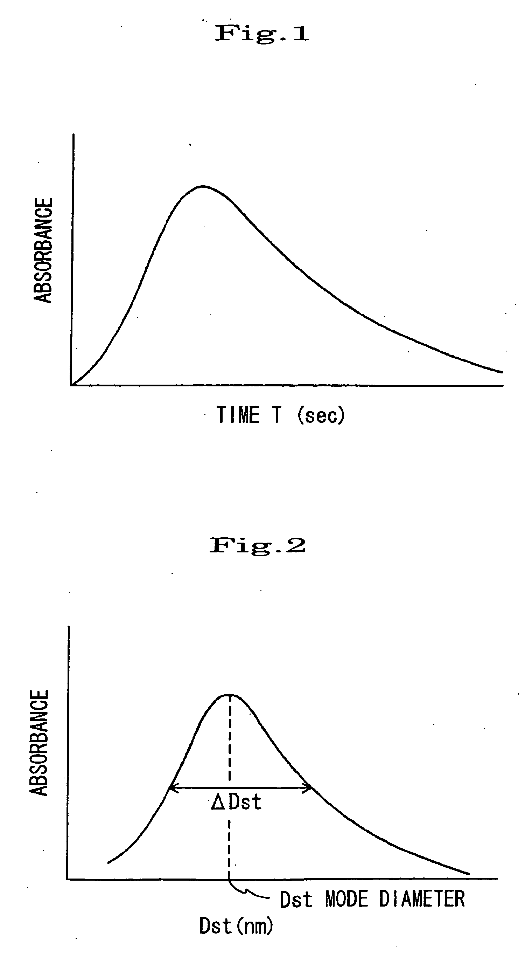

Specifically, dried carbon microspheres are mixed with a 20 vol% ethanol aqueous solution containing a small amount of a surfactant to prepare a dispersion having a carbon concentration of 0.1 $kg/m^3$. The carbon microspheres are sufficiently dispersed by applying ultrasonic waves to form a sample. A disk centrifuge (manufactured by Joyes Lobel, UK) is set to a rotational speed of 100 $s^{-1}$. After the addition of 0.015 $dm^3$ of a spin solution (2 wt% glycerine aqueous solution, 25°C), 0.001 $dm^3$ of a buffer solution (20 vol% ethanol aqueous solution, 25°C) is injected. After the addition of 0.0005 $dm^3$ of the carbon dispersion (25°C) using an injection syringe, centrifugal sedimentation is started. A recorder is operated to create a distribution curve (horizontal axis: elapsed time from the addition of the carbon dispersion using the injection syringe, vertical axis: absorbance at a specific point that changes along with centrifugal sedimentation of the carbon sample) shown in FIG. 1. The time T is read from the distribution curve, and substituted in the following expression to calculate the Stokes equivalent diameter corresponding to the time.

$$D s t \,(nm) = \sqrt{\frac{1.0498 \times 10^6 \cdot \eta}{N^2(\rho_{CB} - \rho_1)} \log \frac{r_2}{r_1}} \times \sqrt{\frac{1}{T}} \times 10^6$$

where, $\eta$ indicates the viscosity ($0.935 \times 10^{-3}$ Pa·s) of the spin solution, N indicates the disk rotational speed ($100 s^{-1}$), $r_1$ indicates the diameter (0.0456 m) at the carbon dispersion injection point, $r_2$ indicates the diameter (0.0482 m) up to the absorbance measurement point, $\rho_{CB}$ indicates the carbon density ($kg/m^3$), and $\rho_1$ indicates the spin solution density ($1.00178 \ kg/m^3$).

The greatest-frequency Stokes equivalent diameter in the distribution curve (FIG. 2) that shows the relationship between the Stokes equivalent diameter and the absorbance is determined to be the Stokes mode diameter Dst (nm), and the difference (half-width) between two Stokes equivalent diameters having a frequency of 50% with respect to the greatest-frequency is determined to be the half-width $\Delta Dst$ (nm).

The carbon microspheres that form the negative electrode material for lithium secondary batteries according to the present invention have a lattice spacing (d002) measured by X-ray diffractometry of 0.360 to 0.370 nm.

If the lattice spacing (d002) of the carbon microspheres is more than 0.370 nm, the number of lithium ion doping sites significantly decreases due to a high degree of amorphousness. As a result, a sufficient amount of lithium ions cannot be intercalated between the hexagonal carbon layers so that the battery capacity decreases. Note that the lattice spacing (d002) of the carbon microspheres is preferably 0.360 to 0.368 nm.

The lattice spacing (d002) is measured by X-ray diffractometry as follows.

A wide-angle X-ray diffraction curve is obtained by a reflecting diffractometer method using $CuK\alpha$ rays made monochrome using a graphite monochromator. The lattice spacing is determined by the Gakushin method.

The carbon microspheres that form the negative electrode material for lithium secondary batteries according to the present invention may be produced by pyrolyzing a hydrocarbon gas in an external heating furnace together with a carrier gas excluding hydrogen gas. When producing carbon microspheres having an arithmetic mean primary particle diameter dn of 450 nm or more, the raw material gas may also be supplied in the subsequent stage of the external heating furnace.

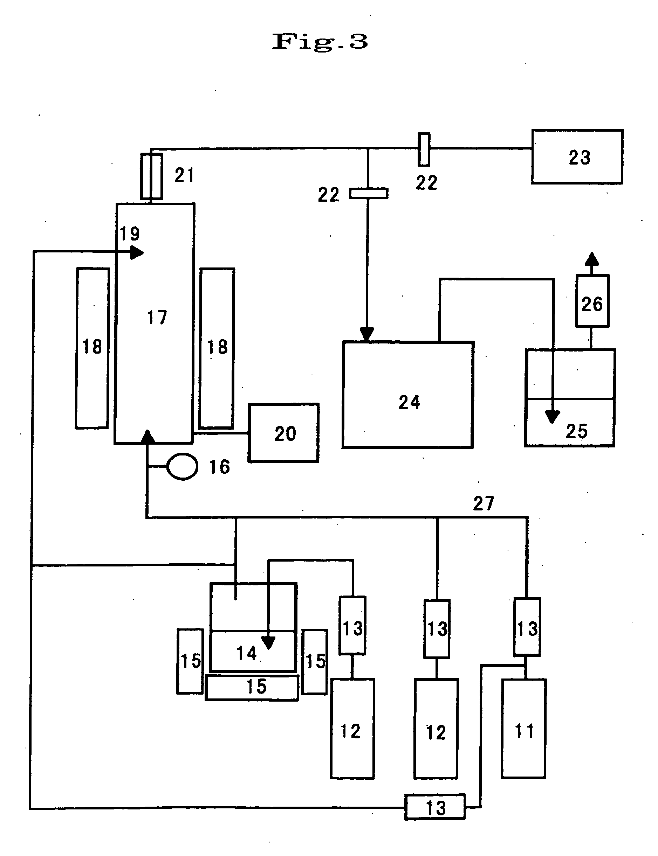

FIG. 3 is a view illustrative of the entire configuration of an apparatus used to produce the carbon microspheres according to the present invention. In FIG. 3, reference numeral 11 indicates a gas cylinder charged with a raw material gas (e.g., methane), reference numeral 12 indicates a gas cylinder charged with a carrier gas (e.g., nitrogen gas), and reference numeral 13 indicates a flowmeter. Reference numeral 14 indicates a raw material tank that stores a liquid hydrocarbon raw material (e.g., toluene). Reference numeral 15 indicates an apparatus that preheats the liquid hydrocarbon raw material to vaporize the liquid raw material gas.

A heating furnace 17 pyrolyzes the hydrocarbon gas (raw material) to convert the hydrocarbon gas into carbon microspheres. For example, the heating furnace 17 is an opaque quartz tube having an inner diameter of 145 mm and a length of 1500 mm. An external heat source 18 is provided outside the heating furnace 17. As the external heating method, a high-frequency induction heating method, an electrothermal heating method, or a combustion gas flow method is used. The heating furnace 17 is deoxidized in advance using a vacuum pump 22, or the atmosphere inside the heating furnace 17 is replaced by an inert gas.

Heat-resistant tubes (e.g., mullite tube or silicon carbide tube) that differ in reaction tube diameter can be inserted into the heating furnace 17 in order to control the flow rate of the mixed gas. The flow rate of the mixed gas may be controlled by arbitrarily changing the flow rates of the raw material gas 11 and the carrier gas 12. When producing carbon microspheres having an arithmetic mean primary particle diameter of more than 450 nm, the raw material gas is also supplied in the subsequent stage of the heater. The temperature inside the furnace is detected using a thermocouple or a radiation thermometer, and controlled to a given temperature using a temperature controller 19.

The decomposed gas containing the carbon microspheres is cooled using a cooling tube 20. The carbon microspheres are collected in a collection chamber 23, and passed through a water tank 24. The decomposed gas is completely combusted in a combustion apparatus 25, and discharged to the outside.

The carbon microspheres are produced by gasifying the raw material hydrocarbon, supplying the hydrocarbon gas to the external heating furnace together with the carrier gas excluding hydrogen gas, and pyrolyzing the hydrocarbon gas.

As the hydrocarbon gas, an aliphatic hydrocarbon such as methane, ethane, propane, butane, ethylene, propylene, or butadiene, a monocyclic aromatic hydrocarbon such as benzene, toluene, or xylene, a polycyclic aromatic hydrocarbon such as naphthalene or anthracene, natural gas, town gas, liquefied natural gas, liquefied petroleum gas, or the like may be used. When the raw material hydrocarbon is liquid or solid at room temperature, the raw material hydrocarbon is vaporized by heating, and is used in a gaseous state.

As the carrier gas, inert gas that is stable during pyrolysis of the hydrocarbon gas and does not react with the hydrocarbon gas is used (excluding hydrogen gas). Examples of the carrier gas include nitrogen, argon, helium, neon, xenon, krypton, and the like.

When using hydrogen gas as the carrier gas, pyrolysis of the hydrocarbon gas is suppressed so that the production yield and the production efficiency decrease. Moreover, the progress of a dehydrogenation reaction on the surface of the carbon microspheres during carbonization is hindered due to a hydrogen atmosphere. As a result, carbon microspheres having an uneven surface are obtained. In this case, undecomposed tarry carbon substances produced by polymerization of the hydrocarbon tend to remain and require a heat treatment. This further decreases the production efficiency.

When producing the carbon microspheres by supplying the raw material hydrocarbon gas to the heating furnace together with the carrier gas and pyrolyzing the hydrocarbon gas, the arithmetic mean primary particle diameter dn, the volatile content Vm, the Stokes mode diameter Dst, the half-width ΔDst, the lattice spacing (d002), and the like of the carbon microspheres are controlled by adjusting and controlling the pyrolysis temperature, the speed of the hydrocarbon gas that passes through the furnace, the ratio (raw material concentration) of the hydrocarbon gas to the carrier gas, supply of the raw material gas in the subsequent stage of the reaction furnace, and the like.

For example, the carbon microspheres may be produced while controlling the pyrolysis temperature at 1000 to 1400°C, the speed of the hydrocarbon gas that passes through the furnace at 0.02 to 4.0 m/sec, and the raw material concentration at 10 to 50 vol%.

EXAMPLES

The present invention is further described below by way of examples and comparative examples. Note that the following examples merely illustrate one aspect of the present invention, and the present invention is not limited to the following examples.

Examples 1 to 7 and Comparative Examples 1 to 3

A heating furnace shown in FIG. 3 having an inner diameter of 145 mm and a length of 1500 mm was used. Methane gas, propane gas, and butane gas were used as the raw material hydrocarbon gas, and nitrogen gas was used as the carrier gas. The raw material hydrocarbon gas was pyrolyzed for two hours while changing the raw material gas concentration, the pyrolysis temperature, the gas flow rate (linear velocity), and the like to produce carbon microspheres.

Example 8 and Comparative Example 4

Toluene gas obtained by gasifying toluene by bubbling with nitrogen gas was used as the raw material hydrocarbon gas.

Example 9

The carbon microspheres obtained in Example 2 were heated at 500°C for two hours in an inert atmosphere.

Comparative Example 5

Toluene gas obtained by gasifying toluene was used as the raw material hydrocarbon gas, and hydrogen gas was used as the carrier gas.

Comparative Example 6

Commercially available thermal black MT was used.

Comparative Example 7

Commercially available hard carbon was ground to obtain a powder, and the grain size of the powder was adjusted to obtain a sample (carbon microspheres).
The arithmetic mean particle diameter dn of the carbon microspheres was measured using an electron microscope. The volatile content Vm of the carbon microspheres was also measured. The Stokes mode diameter Dst and the half-width $\Delta$Dst of the carbon microspheres were measured using a disk centrifuge (DCF). The lattice spacing (d002) of the carbon microspheres was measured by X-ray diffractometry. The results are shown in Table 1.

TABLE 1

| | | Carbon microsphere production conditions | | | | | Properties of carbon microsphere | | | | | |
|---|---|---|---|---|---|---|---|---|---|---|---|---|
| | | Raw material gas*1 | Carrier gas | Raw material concentration (vol%) | Decomposition temperature (°C) | Raw material flow rate (m/sec) | dn (nm) | Vm (%) | Dst (nm) | ΔDst (nm) | ΔDst /Dst | d002 (nm) |
| Example | 1 | M | Nitrogen | 20 | 1350 | 0.75 | 155 | 0.6 | 210 | 130 | 0.62 | 0.361 |
| | 2 | M | Nitrogen | 45 | 1050 | 0.25 | 1000 | 3.5 | 1500 | 1580 | 1.05 | 0.368 |
| | 3 | P | Nitrogen | 30 | 1250 | 0.75 | 300 | 1.5 | 365 | 180 | 0.49 | 0.364 |
| | 4 | P | Nitrogen | 35 | 1150 | 0.50 | 480 | 2.8 | 580 | 520 | 0.90 | 0.368 |
| | 5 | P | Nitrogen | 10 | 1200 | 0.04 | 250 | 2.3 | 310 | 140 | 0.45 | 0.364 |
| | 6 | M | Nitrogen | 10 | 1200 | 3.50 | 200 | 2.5 | 380 | 300 | 0.79 | 0.365 |
| | 7 | B | Nitrogen | 39 | 1350 | 0.12 | 160 | 0.5 | 260 | 160 | 0.62 | 0.360 |
| | 8 | T | Nitrogen | 20 | 1300 | 0.75 | 190 | 0.6 | 280 | 170 | 0.61 | 0.362 |
| | 9 | M | Nitrogen | 20 | 1050 | 0.25 | 1000 | 0.6 | 1500 | 1580 | 1.05 | 0.366 |
| Comparative Example | 1 | M | Nitrogen | 20 | 1350 | 7.00 | 180 | 0.8 | 280 | 330 | 1.18 | 0.364 |
| | 2 | M | Nitrogen | 20 | 1050 | 5.00 | 500 | 4.8 | 800 | 920 | 1.15 | 0.372 |
| | 3 | B | Nitrogen | 20 | 1500 | 0.75 | 90 | 0.3 | 200 | 200 | 1.00 | 0.356 |
| | 4 | T | Nitrogen | 60 | 1200 | 0.75 | 1100 | 3.5 | 1800 | 2200 | 1.22 | 0.369 |
| | 5 | T | Hydrogen | 20 | 1300 | 0.25 | 180 | 7.0 | 260 | 190 | 0.73 | 0.358 |
| | 6 | *2 | | | | | 300 | 2.0 | 370 | 335 | 0.91 | 0.362 |
| | 7 | *3 | | | | | *4 | 0.5 | *4 | *4 | 1.20 | 0.360 |

*1 M: methane, P: propane, B: butane, T: toluene

*2 Thermal black MT

*3 Commercially available hard carbon

*4 dn: 25,000 nm, Dst: 25,000 nm, ΔDst: 30,000 nm

EP 2 151 881 B1

A lithium ion secondary battery was produced by the following method using the carbon microspheres as the negative electrode material, and the performance of the lithium ion secondary battery was evaluated. The results are shown in Table 2.

(Production of three-electrode test cell)

Polyvinylidene fluoride (PVDF) dissolved in N-methyl-2-pyrrolidone was added to the carbon microspheres to a solid content of 10 wt%. The mixture was kneaded to prepare a carbon paste. The carbon paste was applied to a rolled copper foil (thickness: 18 μm), dried, and roll-pressed. A circular sheet (diameter: about 16 mm) was cut from the resulting sheet. A three-electrode test cell was formed using the circular sheet as a negative electrode and lithium metal as a positive electrode and a reference electrode, and the initial efficiency, the reversible capacity, and the rate profile of the test cell were measured.

Initial efficiency

After constantly charging the lithium reference electrode (doping with lithium ions) up to 0.002 V, the lithium reference electrode was constantly discharged (lithium ions were undoped) up to 1.2 V. The initial amount of charging and the initial amount of discharging were measured, and the initial efficiency (%) was calculated by "initial efficiency (%) = (initial amount of discharging / initial amount of charging)× 100".

Reversible capacity

The charging/discharging process was repeated under the above conditions. The reversible capacity (mAh/g) was calculated from the amount of electricity discharged during the tenth cycle.

Rate profile

The rate profile (min) was evaluated by the minimum charging/discharging cycle time in which the charging/ discharging capability (discharge capacity lower limit: 100 mAh/g) of the secondary battery was maintained.

The cycle characteristics were evaluated by conducting a test on a simple coin-type battery.

(Production of negative electrode)

Polyvinylidene fluoride (PVDF) dissolved in N-methyl-2-pyrrolidone was added to the carbon sample to a solid content of 10 wt%. The mixture was kneaded to prepare a carbon paste. The carbon paste was applied to a rolled copper foil (thickness: 18 μm), dried, and roll-pressed. A circular sheet (diameter: about 16 mm) was cut from the resulting sheet, and used as the negative electrode.

(Production of positive electrode)

A polyvinylidene fluoride powder (5 wt%) and a conductive agent (ketjen black EC) (5 wt%) were added to a lithium cobaltate ($LiCoO_2$) powder. The mixture was mixed with N-methylpyrrolidone to prepare a slurry. The slurry was uniformly applied to an aluminum foil, and dried to obtain an electrode sheet. A circular sheet (diameter: about 16 mm) was cut from the resulting electrode sheet to obtain a positive electrode.

(Production of battery)

A simple coin-type battery was produced using the negative electrode and the positive electrode produced as described above. As the electrolyte, a solution prepared by dissolving $LiPF_6$ in a mixed solvent of ethylene carbonate and dimethyl carbonate (volume ratio: 1:1) to a concentration of 1 mol/l was used. Polypropylene nonwoven fabric was used as the separator.

Measurement of cycle characteristics

A charging/discharging test was performed at a constant temperature of 25°C and a constant current of 0.5 mA/cm$^2$ (discharging lower limit voltage: 3.0 V, charging upper limit voltage: 4.2 V). The cycle characteristics were calculated by "cycle characteristics (%) = initial discharge capacity (mAh/g) / discharge capacity (mAh/g) in 500th cycle × 100" (i.e., the ratio of the discharge capacity per unit weight of the carbon negative electrode material in the first cycle to the discharge capacity in the 500th cycle).

TABLE 2

| | | Rate profile (min) | Reversible capacity (mAh/g) | Initial efficiency (%) | Cycle characteristics (%) |
|---|---|---|---|---|---|
| Example | 1 | 3 | 280 | 73 | 80 |
| | 2 | 6 | 290 | 83 | 79 |
| | 3 | 3 | 300 | 79 | 83 |
| | 4 | 4 | 280 | 82 | 80 |
| | 5 | 3 | 280 | 78 | 84 |
| | 6 | 3 | 270 | 77 | 81 |
| | 7 | 3 | 280 | 73 | 82 |
| | 8 | 3 | 280 | 75 | 82 |
| | 9 | 4 | 320 | 86 | 79 |
| Comparative Example | 1 | 3 | 280 | 74 | 50 |
| | 2 | 4 | 190 | 80 | 50 |
| | 3 | 3 | 270 | 50 | 45 |
| | 4 | 20 | 280 | 85 | 49 |
| | 5 | 4 | 120 | 60 | 80 |
| | 6 | 4 | 280 | 80 | 54 |
| | 7 | 60 | 300 | 85 | 50 |

As is clear from the above results, the lithium secondary batteries of the examples exhibited an excellent rate profile, reversible capacity, initial efficiency, and cycle characteristics. In Examples 1 and 7 in which the arithmetic mean primary particle diameter dn was small to some extent, the initial efficiency decreased to some extent. In Example 2 in which the arithmetic mean primary particle diameter dn was large to some extent, the rate profile deteriorated to some extent. In Examples 2 and 9 in which the particle size distribution $\Delta Dst/Dst$ of the aggregates was broad to some extent, the cycle characteristics deteriorated to some extent.

In Comparative Examples 1 and 2 in which the particle size distribution $\Delta Dst/Dst$ of the aggregates was broad, the cycle characteristics deteriorated. In Comparative Example 3 in which the arithmetic mean primary particle diameter dn was small, the initial efficiency decreased. In Comparative Example 4 in which the arithmetic mean primary particle diameter dn was large, the rate profile deteriorated. In Comparative Example 5 in which the carbon microspheres were synthesized using a hydrogen carrier, the initial efficiency deteriorated due to a high volatile content Vm. In Comparative Example 6 in which commercially available thermal black MT was used, the cycle characteristics deteriorated due to a broad particle size distribution $\Delta Dst/Dst$ of the aggregates. In Comparative Example 7 in which commercially available hard carbon was used, the rate profile deteriorated since the hard carbon had a large particle diameter.

INDUSTRIAL APPLICABILITY

The lithium secondary battery produced using the negative electrode material according to the present invention is useful as a high-output lithium secondary battery that may be used as a power supply for portable instruments, hybrid cars, electric vehicles, and the like.

**Claims**

1. A negative electrode material for lithium secondary batteries comprising carbon microspheres said carbon microspheres being produced by pyrolyzing a hydrocarbon gas in an external heating furnace together with a carrier gas excluding hydrogen gas and having an arithmetic mean particle diameter dn measured using an electron microscope of 150 to 1000 nm, a volatile content Vm of 5.0% or less, a ratio $\Delta Dst/Dst$ (where, Dst indicates the Stokes mode diameter Dst measured using a disk centrifuge (DCF), and $\Delta Dst$ indicates the half-width of the Stokes mode diameter Dst) of 0.40 to 1.10, and a lattice spacing (d002) measured by X-ray diffractometry of 0.360 to 0.370 nm.

**Patentansprüche**

1.  Negativelektrodermaterial für Lithium-Sekundärbatterien, welches Kohlenstoff-Mikrokugeln umfasst, wobei die Kohlenstoff-Mikrokugeln durch Pyrolyse eines Kohlenwasserstoffgases in einem extern beheizten Ofen, zusammen mit einem Trägergas, ausgenommen Wasserstoffgas, hergestellt werden und einen arithmetischen mittleren Teilchendurchmesser dn, gemessen unter Verwendung eines Elektronenmikroskops, von 150 bis 1000 nm, einen Gehalt an flüchtigen Bestandteilen Vm von 5,0 % oder weniger, ein Verhältnis ΔDst/Dst (wobei Dst den Stokes-Modendurchmesser Dst, gemessen unter Verwendung einer Tellerzentrifuge (DCF), angibt und ΔDst die Halbwertsbreite des Stokes-Modendurchmessers Dst angibt) von 0,40 bis 1,10 und einen Gitterebenenabstand (d002), gemessen mittels Röntgendiffraktometrie, von 0,360 bis 0,370 nm aufweisen.

**Revendications**

1.  Matériau d'électrode négative pour des batteries secondaires au lithium comprenant des microsphères de carbone, lesdites microsphères de carbone étant produites par pyrolyse d'un hydrocarbure gazeux dans un four à chauffage externe en même temps qu'un gaz porteur excluant l'hydrogène gazeux et ayant un diamètre arithmétique moyen de particules dn mesuré en utilisant un microscope électronique de 150 à 1 000 nm, une teneur en volatiles Vm de 5,0% ou moins, un rapport ΔDst/Dst (où Dst indique le diamètre en mode Stokes Dst mesuré en utilisant une centrifugeuse à disques (DCF), et ΔDst indique la demi-largeur du diamètre en mode Stokes Dst) de 0,40 à 1,10, et une constante réticulaire (d002) mesurée par diffractométrie des rayons X de 0,360 à 0,370 nm.

## Fig.1

TIME T (sec)

## Fig.2

# Fig.3

**REFERENCES CITED IN THE DESCRIPTION**

**Patent documents cited in the description**

- JP 7069611 A
- JP 7272725 A
- JP 63285872 A
- JP 6068867 A
- JP 6068868 A
- JP 6068869 A
- JP 11514491 T
- JP 2005243410 A